# FASCICULE DE BREVET EUROPEEN

(11) **EP 0 818 153 B1**
(45) Date de publication et mention de la délivrance du brevet: **13.11.2002**
(21) Numéro de dépôt: 96201923.8
(22) Date de dépôt: 09.07.1996
(51) Int. Cl.: A23L 1/231, A23L 1/23

(54) **Production d'un arôme de viande**
Herstellung eines Gewürzes mit Fleischgeschmack
Production of meat flavour

(43) Date de publication de la demande: 14.01.1998
(73) Titulaire: SOCIETE DES PRODUITS NESTLE S.A., 1800 Vevey (CH)
(72) Inventeur: Zurbriggen, Beat Dennis, 8180 Buelach (CH); Hose, Hugh, 1436 Treycovagnes (CH); Wood, Robert Dustan, 1274 Signy (CH)

(56) Documents cités:
- EP-A- 0 582 050
- EP-A- 0 640 294
- US-A- 4 308 284
- DATABASE WPI Week 9503 Derwent Publications Ltd., London, GB; AN 95-018243 XP002020658 & JP-A-06 303 940 (KIKUCHI S. ET AL.) , 1 Novembre 1994
- DATABASE WPI Week 8842 Derwent Publications Ltd., London, GB; AN 88-296331 XP002020659 & JP-A-63 216 450 (KIKKOMAN CORP.) , 8 Septembre 1988

## Description

L'invention a pour objet un nouveau procédé de production d'un arôme de viande, ainsi que toutes compositions alimentaires comprenant un tel arôme.

### Etat de la Technique

Il est bien connu que la saveur rappelant celle de la viande peut être engendrée par la réaction à la chaleur entre les groupes aminés libres d'acides-aminés et/ou de peptides, et les groupes carbonyles de sucres réducteurs.

FR1584629 (Kyowa Hakko Kogyo) décrit ainsi une méthode de préparation d'un assaisonnement ayant une saveur analogue à celle d'un extrait de viande, dans lequel on hydrolyse enzymatiquement une protéine, on ajoute des sucres, on règle la teneur en eau et le pH, et on chauffe le mélange. Dans le même but, WO94/25580 (Novo Nordisk) suggère d'hydrolyser une source de protéine avec une préparation protéolytique dérivée *d'Aspergillus oryzae*. De même, EP582050 (Société des Produits Nestlé) décrit un procédé dans lequel on prépare une source de protéine constituée d'un mélange d'extraits de livèche et d'oignon, on ajoute un sucre, on effectue une hydrolyse au moyen d'une fermentation lactique, puis on traite thermiquement le mélange hydrolysé.

On peut aussi développer un arôme de viande uniquement par un procédé de fermentation, sans devoir recourir à un traitement thermique. EP106236 (Société des Produits Nestlé) décrit à ce propos un procédé dans lequel, dans un milieu liquide, on fait fermenter un légume par des bactéries lactiques halophiles, en présence d'une source de protéines hydrolysées en poudre et de 1% à 4,5% de sels en poids sur la base du poids du légume.

Par ailleurs, on connaît d'autres procédés de fermentation qui produisent des facteurs aromatiques utilisés pour différents assaisonnements. Par exemple, la méthode de préparation d'une sauce de soja traditionnelle présente deux étapes de fermentation faisant intervenir respectivement une culture de koji et un microorganisme halophile. EP 417481 (Société des Produits Nestlé) décrit ainsi un procédé de préparation d'une sauce de soja fermentée, dans lequel on prépare un koji par fermentation à l'état solide, avec une culture de koji, d'un mélange de soja cuit et de blé rôti, on hydrolyse le koji en suspension aqueuse durant 3-8 h à 45-60°C avec les enzymes produits durant la fermentation avec la culture de koji, on prépare un moromi en ajoutant du chlorure de sodium à la suspension de koji hydrolysée, on fermente le moromi par un microorganisme halophile, on le presse, on récupère un liquide du moromi pressé, on pasteurise ce liquide et on le clarifie pour ôter les sédiments.

US4308284 (Kikkoman Shoyu) décrit également un procédé rapide de préparation d'une sauce de soja fermentée, dans lequel les étapes classiques de préparation d'un koji puis d'un moromi sont réduites à une seule étape. Pour cela, on fermente directement, à l'état liquide, un koji en présence de sels d'un acide carboxylique à 4 atomes de carbone et de certaines bactéries lactiques et/ou levures, puis on récupère un liquide du koji pressé.

Les sauces de soja ainsi produites ne présentent cependant pas d'arôme de viande.

La présente invention a pour objet une nouvelle méthode de production d'un arôme de viande, à partir de végétaux, qui est relativement simple à mettre en oeuvre, et qui ne nécessite pas d'utiliser des réactifs sophistiqués.

### Résumé de l'Invention

A cet effet, dans le procédé de production d'un arôme de viande selon la présente invention, on prépare un mélange d'une source végétale de protéines et d'une source végétale d'hydrates de carbone, ledit mélange ayant au moins initialement 45% en poids de matière sèche, on l'ensemence avec une ou plusieurs espèces de microorganisme utilisées traditionnellement dans la préparation de produits de charcuterie fermentés, et on l'incube pendant un temps et à une température suffisants pour produire un arôme de viande.

Pour mettre en oeuvre le présent procédé on peut utiliser au moins un microorganisme choisi parmi les espèces *Staphylococcus xylosus, Staphylococcus carnosus, Micrococcus* varians, *Lactobacillus saké, Lactobacillus curvatus, Lactobacillus plantarum, Lactobacillus pentosus, Pediococcus acidilactici, Pediococcus pentosaceus, Carnobacterium piscicola, Carnobacterium divergens*, *Streptomyces griseus, Debaromyces hansenii, Penicilium nalgiovensis* et *Penicillium candidum*, par exemple.

L'invention concerne aussi toutes compositions alimentaires ayant un arôme de viande, en particulier de salami, obtenu selon le présent procédé, ainsi que toutes utilisations de ces compositions pour aromatiser des produits alimentaires.

Contre toute attente, la simple fermentation à l'état solide de végétaux par des microorganismes de charcuterie permet d'obtenir un arôme de viande caractéristique. Les meilleurs arômes sont obtenus lorsque l'on combine une fermentation de végétaux à l'état solide par une culture de koji et par des microorganismes de charcuterie.

De plus, le présent procédé se distingue nettement des techniques traditionnelles de préparation d'un arôme de viande, dans lesquelles on hydrolyse préalablement la source de protéine pour faire apparaître des précurseurs d'arôme de viande, le milieu réactionnel est liquide, et/ou on traite thermiquement le mélange pour faire réagir les groupes aminés libres avec les saccharides réducteurs.

### Description Détaillée de l'Invention

Dans le présent exposé, l'expression "arôme de viande" couvre en fait l'odeur de viande perçue par le nez, et la saveur de viande perçue en bouche.

Pour mettre en oeuvre le présent procédé, on prépare donc un mélange d'une source végétale de protéines et d'une source végétale d'hydrates de carbone, pouvant provenir de légumineuses, d'oléagineux et/ou de céréales, cuits ou rôtis, par exemple de soja, de haricot, de gluten de blé et/ou de riz. Evidemment, l'invention ne couvre pas l'utilisation de matières d'origines animale pour obtenir un arôme de viande.

De préférence, on broie finement les matières végétales, et on ajoute de l'eau jusqu'à une humidité désirée, la teneur en matière sèche du mélange devant en effet être supérieure ou égale à 45%.

On ensemence le mélange de végétaux par une culture de microorganismes de charcuterie, c'est à dire des microorganismes que l'on utilise traditionnellement pour la fermentation de produits de charcuterie, comme des saucisses ou des salamis, par exemple. Ces microorganismes sont bien connues de l'homme du métier, et peuvent être choisies parmi les espèces *Staphylococcus xylosus, Staphylococcus carnosus* (DSM 4952 à titre d'exemple), *Micrococcus varians*, *Lactobacillus saké, Lactobacillus curvatus* (DSM 8768 à titre d'exemple), *Lactobacillus plantarum, Pediococcus pentosaceus* (DSM 7002 à titre d'exemple), *Lactobacillus pentosus* (DSM 1966 à titre d'exemple), *Pediococcus acidilactici*, *Carnobacterium piscicola* (appelé encore couramment *Lactobacillus carnis*: DSM 20722), *Carnobacterium divergens* (appelé encore couramment *Lactobacillus divergens*: DSM 20723), *Streptomyces griseus* (DSM 1054 à titre d'exemple), *Debaromyces hansenii* (DSM 1956 à titre d'exemple), *Penicilium nalgiovensis*, et *Pénicillium candidum*, par exemple (DSM signifie "Deutsche Sammlung von Mikroorganismen und Zellkulturen", Mascheroder Weg 1b, 38124 Braunschweig, Allemagne).

Cette culture de microorganismes de charcuterie peut être une culture, dans un milieu approprié, comprenant 10⁶ à 10⁹ CFU de microorganismes par gramme (Colony Forming Unit), que l'on peut utiliser pour l'ensemencement à raison de 1-10% en poids. De préférence, on concentre cette culture de microorganismes de charcuterie, ou on la sèche par lyophilisation ou par pulvérisation, de façon à obtenir une composition comprenant 10⁹ à 10¹¹ CFU de microorganismes par gramme, que l'on peut ensuite utiliser pour l'ensemencement à raison de 0,01-1% en poids. Les méthodes de concentration, de lyophilisation et de pulvérisation, ainsi que les milieux appropriés pour la culture de microorganismes de charcuterie sont bien connues de l'homme du métier.

De préférence, on ensemence le mélange de végétaux par au moins 2 espèces différentes de microorganismes de charcuterie, de façon à favoriser la production de nombreux précurseurs d'arôme de viande.

Si l'on désire un arôme de saucisse ou de jambon, il est préférable de choisir dans parmi les microorganismes ajoutés au mélange de végétaux au moins une espèce choisie parmi les espèces *Lactobacillus sake* ou *Lactobacillus curvatus*.

Par contre, si l'on désire obtenir un arôme typique de salami, il est également préférable d'ajouter au mélange de végétaux au moins une espèce de microorganisme choisie parmi les espèces *Micrococcus varians*, *Staphylococcus xylosus* ou *Staphylococcus carnosus*. Un arôme typique de salami "Rapelli" peut ainsi être obtenu lorsque l'on combine au moins un *Pediococcus pentosaceus* avec un *Staphylococcus xylosus* ou un *Staphylococcus carnosus* ("Rapelli": Schweizer Lebensmittelindustrie 9/10, 12-14, 1994; Rapelli Mario SA, 6855 Stabio, Suisse). A titre d'exemple, des arômes intenses de salami peuvent ainsi être obtenus selon le présent procédé avec un mélange comprenant au moins un *Pediococcus pentosaceus*, un *Staphylococcus xylosus* et un *Lactobacillus carnis*. Un tel mélange est disponible dans le commerce sous l'appellation ferment "LMP N°7525" de Scheid-Rusal (6038 Gisikon, Suisse).

D'autres ferments adaptés à la fermentation de la viande sont également disponibles dans le commerce. A titre d'exemple, on peut citer les ferments "LMH N°7526" de Scheid-Rusal (49% de *Lactobacillus carnis*, *49%* de *Staphylococcus xylosus*, 2% de *Debaromyces hansenii*), "Baktoferment 61" de Rudolf Müller & Co. (Giessener Strasse 94, 35415 Polhlheim, Allemagne; 100% *S. carnosus*), "Duploferment 66" de Rudolf Müller & Co. (50% de *S. carnosus* et 50% de *L. plantarum*), "Duploferment 78P" de Rudolf Müller & Co. (50% de *S. carnosus* et 50% de *P. pentosaceus*).

Il faut remarquer que le mélange de végétaux ne baigne pas dans un milieu aqueux, mais qu'il est simplement humidifié au point que l'eau ne peut même pas s'égoutter des matières végétales. En effet, la fermentation de ce mélange est réalisée à l'état solide, ce qui signifie que le mélange comprend initialement au moins 45% en poids de matière sèche. En particulier, on a pu noter que les arômes de viande se développent d'autant mieux que la proportion de matière sèche initiale est élevée, ladite proportion pouvant être de 50-65% en poids de matière sèche, notamment 55-60%, par exemple. On peut également remarquer que la proportion de matière sèche du mélange évolue au cours de la fermentation, pouvant ainsi encore s'accroître de 1 à 15% selon le temps de fermentation et la quantité initiale de matière sèche.

On peut incuber le mélange de végétaux en présence de microorganismes de charcuterie à 15-60°C, notamment 15-45°C, pendant 1 à 10 jours, par exemple.

Le mélange de végétaux peut être un koji traditionnel, c'est à dire un mélange d'une source de protéines, d'une source d'hydrates de carbone et d'une culture de koji, ledit mélange pouvant être déjà fermenté ou non par la culture de koji, par exemple.

La culture de koji peut être issue d'une culture de spores de koji telle que l'on peut s'en procurer dans le commerce, notamment au Japon ou en Chine, qui comprend en particulier des spores d'*Aspergillus*, *Rhizopus* et/ou *Mucor,* et notamment des organismes appartenant aux espèces *Aspergillus soyae, Aspergillus oryzae* (ATCC 20386 à titre d'exemple), *Aspergillus phoenicis* (ATCC 14332 à titre d'exemple), *Aspergillus niger* (ATCC 1004 à titre d'exemple), *Aspergillus awamori* (ATCC 14331 à titre d'exemple), *Rhizopus oryzae* (ATCC 4858 à titre d'exemple). *Rhizopus oligosporus* (ATCC 22959 à titre d'exemple), *Rhizopus japonicus* (ATCC 8466 à titre d'exemple), *Rhizopus formosaensis, Mucor circinelloides* (ATCC 15242 à titre d'exemple), *Mucor japanicus, Penicillium glaucum* et *Penicillium fuscum* (ATCC 10447 à titre d'exemple).

La culture de koji peut être une partie biologiquement active d'un koji préalablement produit et fermenté 3 à 10 jours à 15-45°C. Généralement, on ensemence le mélange de végétaux à raison de 1 à 10% en poids d'un tel koji. Si le koji préalablement produit a été concentré et réduit en poudre d'une manière conventionnelle, on peut ensemencer le mélange de végétaux à raison d'au moins 0,01% de koji en poudre.

Dans un premier mode de réalisation particulier de la présente invention, on prépare un mélange d'une source végétale de protéines et d'une source végétale d'hydrates de carbone, on l'ensemence par une culture de koji et une ou plusieurs espèces de microorganismes de charcuterie, on le fermente pendant 1-10 jours à 15-45°C, et on extrait l'arôme de viande du koji fermenté.

Dans un deuxième mode de réalisation particulier de la présente invention, on prépare un mélange d'une source de protéines et d'une source d'hydrates de carbone, ou l'ensemence par une culture de koji, on le fermente pendant 1-10 jours à 15-45°C, on l'ensemence par une ou plusieurs espèces de microorganismes de charcuterie, on le fermente pendant 1-10 jours à 15-45°C, et on extrait l'arôme de viande du koji fermenté.

Il est intéressant de remarquer que l'on peut préparer un jus aromatique à partir du koji fermenté par des microorganismes de charcuterie. Pour cela, on ajoute audit koji des sels, de l'eau et au moins un microorganisme halophile, on l'incube pendant un temps et une température suffisants pour produire un moromi, puis on sépare du moromi un jus aromatique, par exemple.

On peut également préparer un moromi à partir d'un koji qui a été fermenté selon l'invention et qui a subi une ou plusieurs extractions de l'arôme de viande. Néanmoins, il est préférable de mettre en oeuvre des extractions relativement douces de manière à conserver dans le koji une activité protéolytique de l'ordre de 500-3000 unités protéolytique par g de mélange (unités standard), par exemple.

Pour extraire l'arôme de viande du mélange fermenté selon l'invention, on peut faire appel à des techniques d'extraction utilisant de l'huile, des gaz à l'état supercritique ou liquide, ou des fluorocarbones, par exemple.

Pour extraire l'arôme à l'aide d'huile, on peut mélanger le koji fermenté par les microorganismes de charcuterie avec de l'huile, notamment une huile animale ou une huile végétale de tournesol, de palme, d'olive ou d'arachide, par exemple, à raison de 1 partie en poids de koji à 0,1 à 10 parties en poids d'huile. On peut incuber le mélange à 15-65°C pendant 10 min à 48h, de préférence à 40-60°C pendant 2-24h, puis séparer la fraction grasse de la fraction solide, par exemple par pressage et centrifugation. On peut aussi enrichir l'huile en arôme de viande, en extrayant plusieurs fois du koji frais (non-extrait) avec la même huile, par exemple. Il est aussi possible d'extraire le koji fermenté par de l'huile dans un système d'extraction à contre courant conventionnel, par exemple.

On peut aussi extraire l'arôme de viande à l'aide de gaz à l'état supercritique ou liquide, notamment choisis parmi le CO₂, le propane, le butane et le protoxyde d'azote, par exemple. Les techniques d'extraction par un gaz à l'état supercritique et/ou liquide sont bien connues de l'homme du métier. Pour résumer cette technique, dans au moins un étage d'extraction, on met en contact le koji avec un gaz à l'état liquide et/ou à l'état supercritique en fonction de la pression et de la température. On transfère le gaz contenant l'arôme de viande de l'étage d'extraction vers au moins un étage de séparation, on sépare le gaz des composés aromatiques par modification de la pression et/ou de la température, on récupère les composés aromatiques et on recycle le gaz vers l'étage d'extraction.

De préférence, on extrait premièrement un koji fermenté selon l'invention par de l'huile, puis dans une deuxième étape on extrait en continu l'huile par un gaz à l'état supercritique et/ou liquide, la température d'extraction étant de préférence supérieure à la température de fusion de l'huile. Il est souhaitable que la température n'excède pas 60°C de façon à ne pas endommager les composés aromatiques de viande. On pont appliquer un gradient de température à l'étage d'extraction de l'ordre de 1 à 15°C. On peut faire recirculer dans l'étage d'extraction, en continu, l'huile déjà extraite de façon à accroître le rendement d'extraction final. Enfin, on peut extraire 1 partie d'huile avec 1-100 parties de fluide à l'état supercritique, à 120-160 bar, puis on peut séparer l'arôme de viande extrait par détente du gaz à une pression de l'ordre de 50-100 bar, par exemple.

On peut aussi extraire l'arôme de viande du koji fermenté ou d'un extrait déjà enrichi en arôme, par exemple un extrait d'huile, à l'aide de fluorocarbones. Cette technique est particulièrement avantageuse car elle permet d'obtenir, à un coût réduit, une concentration satisfaisante en arôme de viande, par exemple.

Les extraits en arôme de viande selon la présente invention peuvent être parfaitement conservés pendant 1-12 mois à une température de -10°C à 30°C. Cependant, il est préférable d'ajouter à l'extrait aromatique au moins un anti-oxydant pour favoriser la stabilité des arômes. Parmi les anti-oxydants, on peut utiliser des tocophérols, de l'acide ascorbique ou un de ses sels, de l'acide citrique ou un de ses sels, du buthylhydroxyanisol (BHA), de l'acide rosmarinique ou du buthylhydroxytoluol (BHT), par exemple.

On peut aussi choisir d'encapsuler les arômes de viande selon l'invention dans un mélange de maltodextrine et/ou de cyclodextrine, ledit mélange pouvant être ensuite séché par lyophilisation ou pulvérisation, par exemple. L'homme du métier dispose de nombreuses méthodes d'encapsulation.

Les extraits aromatiques selon l'invention peuvent être utilisés pour l'aromatisation de produits à base de viande, de chips, d'épices, de pâtes alimentaires, de sauces ou de bouillons, à raison de 0,01 à 8% en poids, par exemple.

On peut aussi envisager de combiner un produit alimentaire directement à une partie du mélange de végétaux fermenté selon la présente invention. Dans ce but, il est préférable d'inactiver les activités enzymatiques et bactériennes/fongiques par traitement du mélange à une très haute pression combinée à une chaleur modérée. En effet des températures supérieures à 60°C sont susceptibles de dénaturer les composés aromatiques impliques dans le goût de viande.

L'invention est décrite plus en détail ci-après à l'aide du complément de description qui va suivre, qui se réfère à des exemples de préparation de koji fermentés par des microorganismes de charcuterie. Ces exemples sont précédés de la description d'une méthode analytique. Les pourcentages sont donnés en poids sauf indication contraire. Il va de soi, toutefois, que ces exemples sont donnés à titre d'illustration de l'objet de l'invention dont ils ne constituent en aucune manière une limitation.

### Analyse sensorielle

Un panel de 10 personnes compare en aveugle l'odeur et la saveur de viande présentés par des extraits de koji fermentés obtenus dans les exemples décrits ci-après, par rapport à l'arôme de salami Suisse "Rapelli" (Schweizer Lebensmittelindustrie 9/10, 12-14, 1994; Rapelli Mario SA, 6855 Stabio, Suisse).

Les scores (+), (++) et (+++) indiquent respectivement que le produit présente, par rapport au contrôle, un arôme de salami peu intense, satisfaisant, et intense. L'absence d'arôme de salami se caractérise le plus souvent par une odeur de champignon caractéristique du koji.

### Exemple 1

On réalise plusieurs essais, dans lesquels on mélange dans un incubateur 7 kg de gluten de blé cuit, 3 kg de farine de blé rôti, de l'eau, 0,015% en poids de la culture en poudre *Aspergillus oryzae* Super Ichumarisake® (BIOC, Japon) et différentes proportions du ferment commercial N°7528 de Scheid-Rusal AG (6038 Gisikon, Suisse) recommandé pour la fermentation du salami et qui comprend 33% de *Pediococcus pentosaceus*, 66% de *Staphylococcus xylosus* et 1% de *Lactobacillus carnis*. On incube le mélange pendant 42 h à 30°C, puis on détermine la proportion de matière sèche finale et on caractérise l'arôme de viande produit au moyen de l'analyse sensorielle décrite ci-dessus.

Pour comparaison, on réalise en parallèle plusieurs autres essais dans lesquels on incube les mêmes mélanges de blé en présence uniquement de 0,015% de culture en poudre d'*Aspergillus oryzae*.

Les résultats, présentés au tableau 1 ci-après, montrent que l'on produit un arôme de salami caractéristique lorsque l'on utilise le ferment commercial de salami. On peut aussi noter que l'arôme de salami est d'autant plus intense que la proportion de matière sèche initiale est élevée.

**Tableau 1**

| Essai | Matière sèche % initiale - % finale | % de ferment de salami (FS); % *A. oryzae* (AO) | Arôme (score) |
|---|---|---|---|
| 1 | 51%-64% | 0,015 AO | champignon |
| 2 | 51%-64% | 0,015 AO; 0,2 FS | salami ++ |
| 3 | 51%-64% | 0,015 AO; 0,02 FS | salami ++ |
| 4 | 54%-67% | 0,015 AO | champignon |
| 5 | 54%-67% | 0,015 AO; 0,2 FS | salami + |
| 6 | 54%-67% | 0,015 AO; 0,02 FS | salami + |
| 7 | 55%-70% | 0,015 AO | champignon |
| 8 | 55%-70% | 0,015 AO; 0,2 FS | salami +++ |
| 9 | 55%-70% | 0,015 AO; 0,02 FS | salami ++ |

### Exemple 2

On réalise plusieurs essais dans lesquels, on mélange dans un incubateur 7 kg de soja cuit, 3 kg de farine de blé rôti, de l'eau, 0,015% en poids de la culture en poudre *Aspergillus oryzae* Super Ichumarisake® et différentes proportions du ferment commercial N°7528 de Scheid-Rusal AG. On incube le mélange pendant 42 h à 30°C, puis on détermine la proportion de matière sèche, et on caractérise l'arôme de viande produit au moyen de l'analyse sensorielle décrite ci-dessus.

Pour comparaison, on réalise en parallèle plusieurs autres essais dans lesquels on incube les mêmes mélange de soja en présence uniquement de 0,015% de culture en poudre d'*Aspergillus oryzae*.

Les résultats, présentés au tableau 2 ci-après, montrent que l'on produit un arôme de salami caractéristique lorsque l'on utilise le ferment commercial de salami. On peut aussi noter que l'arôme de salami est d'autant plus intense que la proportion de matière sèche initiale est élevée.

**Tableau 2**

| Essai | Matière sèche % initiale - % finale | % de ferment de salami (FS); % *A. oryzae* (AO) | Arôme (score) |
|---|---|---|---|
| 1 | 53%-68% | 0,015 AO | champignon |
| 2 | 53%-69% | 0,015 AO; 0,2 FS | salami + |
| 3 | 51%-66% | 0,015 AO | champignon |
| 4 | 51%-67% | 0,015 AO; 0,2 FS | salami ++ |
| 5 | 51%-67% | 0,015 AO; 0,02 FS | salami ++ |
| 6 | 59%-71% | 0,015 AO | champignon |
| 7 | 59%-71% | 0,015 AO; 0,2 FS | salami +++ |

### Exemple 3

On mélange dans un incubateur (Fujiwara Koji Machine, JP) 400 kg d'un mélange comprenant 7 parties de soja cuit, 3 parties de farine de blé rôti, de l'eau jusqu'à une teneur en matière sèche de 58%, 0,015% en poids de la culture en poudre *Aspergillus oryzae* Super Ichumarisake®, et 0,2% du ferment commercial N°7528 de Scheid-Rusal. On incube le mélange à 30°C pendant 42h, puis on détermine la proportion de matière sèche finale, et on caractérise l'arôme de viande produit au moyen de l'analyse sensorielle décrite ci-dessus.

Les résultats montrent que la teneur en matière sèche finale est de 72% et que le koji fermenté dégage un arôme de salami intense (score +++).

### Exemple 4

On réalise plusieurs essais dans lesquels, on mélange 2kg du koji fermenté obtenu à l'exemple 3, à 2kg d'huile de tournesol, on incube pendant différents temps à différentes températures, et enfin on presse les mélanges pour récupérer la partie liquide grasse. Les conditions d'incubations sont données dans le tableau 3 ci-dessous.

On soumet une partie de l'huile issue du mélange incubé 24h à 50°C à un enrichissement en arôme de salami (voir le tableau 3 ci-dessous: "enrichissement 2x"). Pour cela, on mélange 1 kg du koji fermenté obtenu à l'exemple 3, à 1 kg d'huile issue du mélange incubé 24h à 50°C, on incube ce nouveau mélange pendant 24h à 50°C, et enfin on le presse pour récupérer la partie grasse liquide.

Une partie de l'huile ainsi enrichie est également centrifugée.

On soumet enfin les extraits à l'analyse sensorielle décrite ci-dessus, à la différence qu'un score de 1 à 9 est attribué à l'arôme des extraits, le score de "1" indiquant qu'on obtient un arôme de viande éloigné de celui du salami de référence, et le score de "9" indiquant qu'on obtient un arôme de salami bien plus intense que celui du salami de référence. Un ordre de préférence est également attribué aux différents extraits, l'attribut 1 marquant la meilleure préférence, et l'attribut 7 marquant la moins bonne préférence.

Les résultats, présentés dans le tableau 3 ci-dessous, montrent qu'il est préférable d'incuber le koji fermenté dans l'huile à des températures élevées (50°C) et pendant moins de 24h. De plus, l'enrichissement en arôme est nettement perceptible par les dégustateurs.

**Tableau 3**

| N° Essai: Conditions | Remarques sur l'arôme de salami | Score | Classement |
|---|---|---|---|
| 1: Incubation 24 h, 4°C | Arôme de salami faible, goût de pain | 3,7 | 7 |
| 2: Incubation 24 h, 35°C | Arôme fort, gras, proche de la référence | 6 | 4 |
| 3: Incubation 1 h, 50°C | Arôme de salami faible, pas d'arrière goût | 4,7 | 6 |
| 4: Incubation 2 h, 50°C | Arôme fort, note grillé, très agréable, proche de la référence | 6,3 | 5 |
| 5: Incubation 4 h, 50°C | Arôme plus fort que la référence, typique d'un arôme de salami, très aromatique | 6,7 | 2 |
| 6: Incubation 24 h, 50°C | Arôme plus fort que la référence, note grillé, moyennement aromatique | 6 | 6 |
| 7: Incubations 24 h, 50°C Enrichissement 2x Pas de centrifugation | Arôme fort, légèrement acide, très proche de l'arôme d'un salami Rapelli | 6,7 | 1 |
| 8: Incubations 24 h, 50°C Enrichissement 2x Centrifugation | Arôme fort, proche de l'arôme de référence, gras | 6,7 | 3 |

### Exemple 5

On analyse la stabilité de l'arôme de salami de l'extrait obtenu à l'essai 8 de l'exemple 4, en fonction de la température, du temps, et de la présence ou non de 0,1% d'anti-oxydant Herbor 025 (Fis, USA). Les résultats montrent que l'arôme de salami est parfaitement conservé à 4°C pendant 3 mois en absence ou en présence d'anti-oxydant. Par contre, les extraits conservés 2 ou 3 mois à 20°C en l'absence d'anti-oxydant perdent environ la moitié de leur intensité d'arôme, tandis que ceux conservés pendant 2-3 mois à 20°C en présence d'anti-oxydant ne perdent pas d'arôme. A des températures supérieures à 25°C, en absence d'antioxydant, les extraits perdent totalement au bout de 2 mois leur arôme, tandis que les extraits comprenant un anti-oxydant perdent moins de 10 à 30% de leur arôme après 3 mois de conservation.

### Exemple 6

On extrait le koji fermenté obtenu à l'exemple 3, à l'aide d'un fluide de dioxyde de carbone à l'état supercritique. Pour cela, on met en contact une partie de koji avec 20 parties de dioxyde de carbone à 40°C, sous une pression de 150 bar, pendant 50 min. On sépare l'arôme de viande en faisant passer le dioxyde de carbone dans 3 séparateurs successifs ayant respectivement une pression de 90, 60 et 50 bar. On recycle le dioxyde de carbone dans l'extracteur. Finalement, on récupère à chaque sortie des séparateurs une phase grasse présentant un fort arôme de salami. On estime que l'arôme de salami peut être concentré au moins d'un facteur 100.

### Exemple 7

On extrait l'huile enrichi obtenu à l'essai 8 de l'exemple 4, au moyen d'un fluide de dioxyde de carbone à l'état supercritique ou liquide selon la température. Pour cela, on fait circuler en continu 0,9 à 1,56 kg/h d'huile et 26,8 à 39 kg/h de dioxyde de carbone dans une colonne comprenant 4 étages d'extraction ayant respectivement une température de 30, 40, 40 et 45°C, la pression étant ajustée à 130 ou 150 bar selon l'essai considéré. On recycle en continu l'huile dans la colonne d'extraction. On sépare la fraction aromatique en faisant passer le fluide dans 2 séparateurs successifs ayant respectivement une pression de 90 et 55 bar. On recycle le dioxyde de carbone dans l'extracteur. Finalement, on récupère à chaque sortie des séparateurs une phase grasse présentant un fort arôme de salami. Le rendement qualifie le pourcentage de matière extrait dans les deux séparateurs par rapport à la quantité d'huile initiale. Les résultats sont présentés dans le tableau 4 ci-après.

**Tableau 4**

| Essai | Huile (kg/h) | CO2 (kg/h) | Pression extraction (bar) | Intensité de l'arôme dans le séparateur de 90 bar | Intensité de l'arôme dans le séparateur de 55 bar | Rendement (%) |
|---|---|---|---|---|---|---|
| 1 | 1,56 | 39 | 150 | ++ | +++ | 6,5 |
| 2 | 1,44 | 37,4 | 130 | ++ | +++ | 6,3 |
| 3 | 0,9 | 26,8 | 130 | ++ | +++ | 8,7 |

### Exemple 8

On extrait l'huile enrichie obtenue à l'essai 8 de l'exemple 4, au moyen d'un solvant de fluorocarbones, selon le protocole décrit dans EP616821. Pour cela, on met en contact 1 partie de solvant avec 1 partie d'huile enrichie, à une pression de 6 bar, à température ambiante et pendant 2 h. On récupère le solvant, puis on sépare une fraction grasse aromatique en laissant le solvant s'évaporer à pression ambiante.

Selon les essais, on peut répéter plusieurs fois l'extraction de l'huile par un ou plusieurs solvants. A cet effet, on peut utiliser 3 solvants différents comprenant respectivement 100% de 1,1,1,2-tetrafluoroéthane (solvant A), 90% de 1,1,1,2-tetrafluoroéthane et 10% de butane (solvant B), et 90% de 1,1,1,2-tetrafluoroéthane et 10% de diméthyléther (solvant C). Les résultats sont présentés dans le tableau 5 ci-après. Le rendement qualifie le pourcentage de matière extrait par rapport à la quantité d'huile initiale. Bien que les rendements peuvent apparaître plus faibles que ceux obtenus pour les extraits décrit à l'exemple 7, cette technique d'extraction est cependant prometteuse du point de vue de son coût (environ 10 fois moins chère qu'une extraction avec un fluide supercritique), et de la haute concentration en arôme de salami (intensité plus forte que celle obtenue dans les extraits des exemples 6 et 7).

**Tableau 5**

| Essai | Conditions d'extraction | Rendement (%) |
|---|---|---|
| 1 | Extraction 3 fois avec le solvant A | 0,88 |
| 2 | Huile de l'essai 1 extraite à nouveau 3 fois par le solvant C | 0,90 |
| 3. | Huile de l'essai 2 extraite à nouveau 3 fois par le solvant B | 1,56 |
| 4 | Extraction 1 fois avec le solvant A | 0,41 |
| 5 | Extraction 1 fois avec le solvant B | 0,36 |
| 6 | Extraction 1 fois avec le solvant C | 0,28 |

### Exemple 9

On prépare un moromi à partir du koji extrait obtenu à l'essai 8 de l'exemple 4. Pour cela on ajoute 40% de koji fermenté à une solution aqueuse comprenant 18% de chlorure de sodium, on l'ensemence par une culture de *Saccharomyces cerevisiae* comprenant plus de 10⁸ CFU/ml, on l'incube à 30°C pendant 2 jours, on le presse et on sépare un jus aromatique.

## Revendications

1. Procédé de production d'un arôme de viande, dans lequel on prépare un mélange d'une source végétale de protéines et d'une source végétale d'hydrates de carbone, ledit mélange ayant au moins initialement 45% en poids de matière sèche, on l'ensemence avec une ou plusieurs espèces de microorganismes utilisées traditionnellement dans la préparation de produits de charcuterie fermentés, et on l'incube pendant 1-10 jours à 15-45°C.

2. Procédé selon la revendication 1, dans lequel on utilise au moins un microorganisme choisi parmi les espèces *Staphylococcus xylosus, Staphylococcus carnosus, Micrococcus varians, Lactobacillus saké, Lactobacillus curvatus, Lactobacillus plantarum, Lactobacillus pentosus, Pediococcus acidilactici, Pediococcus pentosaceus, Carnobacterium piscicola, Carnobacterium divergens, Streptomyces griseus, Debaromyces hansenii, Penicilium nalgiovensis et Penicillium candidum*.

3. Procédé selon la revendication 1, dans lequel on utilise un koji comme mélange comprenant au moins une source de protéines et une source d'hydrates de carbone.

4. Procédé selon l'une des revendications 1-3, dans lequel on prépare un mélange d'une source de protéines et d'une source d'hydrates de carbone, on l'ensemence par une culture de koji et une ou plusieurs espèces de microorganismes de charcuterie, on l'incube pendant 1-10 jours à 15-45°C, et on extrait l'arôme de viande du koji fermenté.

5. Procédé selon l'une des revendications 1-3, dans lequel on prépare un mélange d'une source de protéines et d'une source d'hydrates de carbone, on l'ensemence par une culture de koji, on l'incube pendant 1-10 jours à 15-45°C, on l'ensemence à nouveau par une ou plusieurs espèces de microorganismes de charcuterie, on l'incube pendant 1-10 jours à 15-45°C, et on extrait l'arôme de viande du koji fermenté.

6. Procédé selon l'une des revendications 1-5 dans lequel, on extrait l'arôme de viande par de l'huile, un gaz à l'état ou liquide, ou un solvant à base de fluorocarbones.

7. Procédé selon l'une des revendications 3-5 dans lequel, on prépare un moromi à partir du koji fermenté par une ou plusieurs espèces de microorganismes de charcuterie, ledit koji étant extrait ou non.

8. Procédé selon l'une des revendications 1 à 5, ledit procédé faisant intervenir une étape d'incubation avec un mélange de *Pediococcus pentosaceus* et *Staphylococcus xylosus* ou *Staphylococcus carnosus*.

9. Utilisation d'un extrait aromatique susceptible d'être obtenu par le procédé revendiqué à la revendication 5, pour l'aromatisation de produits alimentaires.

## Claims

1. Process for producing a meat flavour, in which a mixture of a plant source of proteins and of a plant source of carbohydrates is prepared, the said mixture at least initially having a dry matter content of 45% by weight, it is inoculated with one or more species of microorganism traditionally used in the preparation of fermented cooked meat products, and it is incubated for 1-10 days at 15-45°C.

2. Process according to Claim 1, in which at least one microorgasism is used that is chosen from the species *Staphylococcus xylosus, Staphylococcus carnosus, Micrococcus varians, Lactobacillus sake, Lactobacillus curvatus, Lactobacillus plantarum, Lactobacillus pentosus, Pediococcus acidilactici, Pediococcus pentosaceus, Carnobacterium piscicola, Carnobacterium divergens, Streptomyces griseus, Debaromyces hansenii, Penicilium nalgiovensis* and *Penicillium candidum.*

3. Process according to Claim 1, in which a koji is used as a mixture comprising at least one source of proteins and a source of carbohydrates.

4. Process according to one of Claims 1 to 3, in which a mixture of a source of proteins and of a source of carbohydrates is prepared, it is inoculated with a koji culture and one or more species of microorganisms found in cooked meat products, it is incubated for 1-10 days at 15-45°C and the meat flavour is extracted from the fermented koji.

5. Process according to one of Claims 1 to 3, in which a mixture of a source of proteins and of a source of carbohydrates is prepared, it is inoculated with a koji culture, it is incubated for 1-10 days at 15-45°C, it is inoculated again with one or more species of microorganisms found in cooked meat products, it is incubated for 1-10 days at 15-45°C and the meat flavour is extracted from the fermented koji.

6. Process according to one of Claims 1 to 5, in which the meat flavour is extracted with oil, a gas in the supercritical or liquid state, or a fluorocarbon-based solvent.

7. Process according to one of Claims 3 to 5, in which a moromi is prepared from the fermented koji by one or more species of microorganisms found in cooked meat products, the said koji optionally being extracted.

8. Process according to one of Claims 1 to 5, the said process involving a step of incubation with a mixture of *Pediococcus pentosaceus* and *Staphylococcus xylosus* or *Staphylococcus carnosus.*

9. Use of a flavouring extract that may be obtained by the process claimed in Claim 5, for flavouring food products.

## Patentansprüche

1. Verfahren zur Herstellung von Fleischaroma, bei dem man eine Mischung aus einer pflanzlichen Proteinquelle und einer pflanzlichen Kohlenhydratquelle herstellt, wobei diese Mischung mindestens anfangs 45 Gew.-% Trockenmasse besitzt, sie mit einem oder mehreren Arten von Mikroorganismen beimpft, die gewöhnlich bei der Herstellung von fermentierten Fleisch- und Wurstwaren verwendet werden, und sie während 1-10 Tagen bei 15-45°C inkubiert.

2. Verfahren nach Anspruch 1, bei dem man mindestens einen Mikroorganismus verwendet, der aus den folgenden Arten ausgewählt ist: *Staphyloscoccus xylosus, Staphylococcus carnosus, Micrococcus varians, Lactobacillus sake, Lactobacillus curvatus, Lactobacillus plantarum, Lactobacillus pentosus, Pediococcus acidilactici, Pediococcus pentosaceus, Carnobacterium piscicola, Carnobacterium divergens, Streptomyces griseus, Debaromyces hansenii, Penicillium nalgiovensis* und *Penicillium candidum*.

3. Verfahren nach Anspruch 1, bei dem ein Koji als Mischung verwendet wird, das mindestens eine Proteinquelle und eine Kohlenhydratquelle enthält.

4. Verfahren nach einem der Ansprüche 1 bis 3, bei dem man eine Mischung aus einer Proteinquelle und einer Kohlenhydratquelle herstellt, sie mit einer Kojikultur und einer oder mehreren Arten von Mikroorganismen der Fleisch- und Wurstwarenherstellung beimpft, sie während 1-10 Tagen bei 15-45°C inkubiert und das Fleischaroma aus dem fermentierten Koji extrahiert.

5. Verfahren nach einem der Ansprüche 1 bis 3, bei dem man eine Mischung aus einer Proteinquelle und einer Kohlenhydratquelle herstellt, sie mit einer Kojikultur beeimpft, sie während 1-10 Tagen bei 15-45°C inkubiert, sie mit einer oder mehreren Arten von Mikroorganismen der Fleisch- oder Wurstwarenherstellung wieder beimpft, sie während 1-10 Tagen bei 15-45°C inkubiert und das Fleischaroma aus dem fermentierten Koji extrahiert.

6. Verfahren nach einem der Ansprüche 1 bis 5, bei dem man das Fleischaroma mit Öl, einem Gas im überkritischen oder flüssigen Zustand oder einem Lösungsmittel auf Fluorkohlenstoffbasis extrahiert.

7. Verfahren nach einem der Ansprüche 3 bis 5, bei dem man ein Moromi aus Koji herstellt, das mit einem oder mehreren Arten von Mikroorganismen der Fleisch- und Wurstwarenherstellung fermentiert wurde, wobei dieses Koji extrahiert ist oder nicht.

8. Verfahren nach einem der Ansprüche 1 bis 5, bei dem ein Schritt der Inkubation mit einer Mischung aus *Pediococcus pentosaceus* und *Staphylococcus xylosus* oder *Staphylococcus carnosus* stattfindet.

9. Verwendung eines aromatischen Extrakts, der nach dem Verfahren nach Anspruch 5 erhältlich ist, für die Aromatisierung von Nahrungsmittelprodukten.
